# EUROPÄISCHE PATENTSCHRIFT

(11) **EP 2 993 067 B1**
(45) Veröffentlichungstag und Bekanntmachung des Hinweises auf die Patenterteilung: **10.10.2018**
(21) Anmeldenummer: 15179759.4
(22) Anmeldetag: 05.08.2015
(51) Int. Cl.: B60H 1/00

(54) **VERFAHREN ZUR KLIMATISIERUNG EINER FAHRGASTZELLE EINES KRAFTFAHRZEUGS**
METHOD FOR AIR CONDITIONING A PASSENGER COMPARTMENT OF A MOTOR VEHICLE
PROCEDE DE CLIMATISATION D'UN ESPACE POUR PASSAGER D'UN VEHICULE AUTOMOBILE

(30) Priorität: 29.08.2014 DE 102014217356
(43) Veröffentlichungstag der Anmeldung: 09.03.2016
(73) Patentinhaber: Volkswagen Aktiengesellschaft, 38440 Wolfsburg (DE)
(72) Erfinder: Bader, Viktor, 38448 Wolfsburg (DE)

(56) Entgegenhaltungen:
- JP-A- S6 277 212
- JP-A- H05 116 523
- US-A- 5 291 748

## Beschreibung

Die Erfindung bezieht sich auf ein Verfahren zur Klimatisierung einer Fahrgastzelle eines Kraftfahrzeugs, wobei Klimatisierungsorgane, mittels derer Klimaparameter in der Fahrgastzelle beeinflussbar sind, von einer Steuereinrichtung angesteuert werden, einen subjektiven Ziel-Komfortzustand eines privilegierten Fahrzeuginsassen einzuregeln, wobei als ein Indikator für den jeweils aktuellen Komfortzustand ein jeweils aktueller, für den subjektiven Komfortzustand repräsentativer Biometrieparameter des privilegierten Fahrzeuginsassen gemessen wird.

Derartige Klimatisierungsverfahren sind bekannt aus der US 5,291,748 A.

Klimatisierungsverfahren in Kraftfahrzeugen dienen allgemein der Steigerung des klimatischen Komforts der Fahrzeuginsassen bzw. bei individualisierten Klimatisierungsverfahren der Steigerung des klimatischen Komforts wenigstens eines privilegierten Fahrzeuginsassen, der typischerweise der Fahrer ist, in speziellen Chauffeur-Fahrzeugen jedoch auch ein anderer Fahrzeuginsasse sein kann. Innerhalb bestimmter Grenzen ist es auch möglich, für mehrere Fahrzeuginsassen gleichzeitig den individuellen klimatischen Komfort zu optimieren. In diesem Fall sind mehrere Fahrzeuginsassen gleich privilegiert. Zur Erfassung des individuellen klimatischen Komforts hat sich der sogenannte PMV-Wert, ein gemäß DIN EN ISO 7730 definierter thermischer Komfort-Index, eingebürgert. Der Wertebereich des PMV-Wertes läuft von -3 bis +3, wobei ein PMV-Wert von 0 optimalen klimatischen Komfort bedeutet, ein PMV-Wert unter 0 eine Abweichung in Richtung "zu kalt" und ein PMV-Wert über 0 eine Abweichung in Richtung "zu warm" angibt. Das Ziel moderner Klimatisierungsverfahren ist die Einregelung eines PMV-Wertes von 0 (oder eines vergleichbaren Komfort-Indexwertes), wobei ein solcher Wert selbstverständlich nicht direkt messbar ist. Vielmehr müssen sich alle Klimatisierungsverfahren damit behelfen, bei der Klimaregelung für den klimatischen Komfort mehr oder weniger repräsentative Messgrößen zu erfassen und im Rahmen der speziellen Regelungsstrategie zu berücksichtigen. So wird stets wenigstens ein Sollwert eines solchen Parameters vorgegeben und die Klimatisierungsorgane des Fahrzeugs, beispielsweise Heizgeräte, Kühlanlagen, Gebläse, Sitzlüftungen und ähnliches, so angesteuert, dass im Rahmen geeigneter Regelkreise der Sollwert für den ausgewählten Parameter erreicht wird. Als Konsequenz führt dies zu einer Einregelung eines subjektiven Ziel-Komfortzustandes. Die Qualität der Regelung hängt sehr weitgehend davon ab, wie repräsentativ der als Regelgröße ausgewählte Parameter für den individuellen klimatischen Komfort des privilegierten Fahrzeuginsassen ist. Einfache Systeme greifen hier auf leicht messbare Größen, wie beispielsweise eine absolute Raumtemperatur zurück.

Die DE 102 38 552 A1 offenbart hingegen die Verwendung von Biometrieparametern als für den individuellen klimatischen Komfort repräsentative Regelgrößen. Insbesondere werden Temperatur- und Feuchtemessungen im Bereich des Sitzes des privilegierten Fahrzeuginsassen vorgeschlagen. Dabei wird eine für alle Fälle gleichbleibende Regelungsstrategie vorgeschlagen. Es hat sich jedoch gezeigt, dass eine derart starre Strategie den unterschiedlichen Fällen, die in der Realität auftreten, nicht gerecht wird. Insbesondere versagt innerhalb eines solchen Systems eine für Komfort-Abweichungen in Richtung "zu kalt" optimierte Regelungsstrategie in Fällen einer Komfort-Abweichung in Richtung "zu warm" und umgekehrt.

Aus der eingangs genannten, gattungsbildenden US 5,291,748 A ist es bekannt, die Hauttemperatur im Gesichtsbereich des privilegierten Fahrzeuginsassen als indikativ für dessen aktuellen Komfortzustand abzuschätzen, wobei zur Verbesserung der Äbschätzungs-Zuverlässigkeit sowohl eine direkte als auch indirekte Hauttemperaturmessungen, letztere insbesondere als Lufttemperatur-, -feuchte- und -geschwindigkeitsmessungen in der Umgebung des Insassengesichts, gemessen und mittels eines neuronalen Netzwerks in eine Regelgröße für die Klimaregelung umgerechnet werden. Die Druckschrift schlägt auch alternative Biometrieparameter als für den Komfortzustand repräsentative Indikatoren vor, nämlich insbesondere Hirnwellen, Puls, Hautpotential, etc.. Auch dieser Ansatz löst nicht das oben bereits erwähnte Problem, dass sich in der Praxis der Korrelationsgrad zwischen dem jeweils ermittelten Biometrieparameter und dem tatsächlichen Komfortzustand, d.h. sein Wert als verlässlicher Indikator für den Komforzustand, als von Qualität der aktuellen Komfort-Abweichung abhängig erweist.

Es die Aufgabe der vorliegenden Erfindung ein gattungsgemäßes Klimatisierungsverfahren derart weiterzubilden, dass es einer größeren Anzahl unterschiedlicher Fälle von Komfortabweichungen gerecht wird.

Diese Aufgabe wird in Verbindung mit den Merkmalen des Oberbegriffs von Anspruch 1 dadurch gelöst, dass in Abhängigkeit davon, ob der aktuelle Komfortzustand in Richtung "zu kalt" oder in Richtung "zu warm" von dem einzuregelnden Ziel-Komfortzustand abweicht, ein anderer, für den subjektiven Komfortzustand repräsentativer Biometrieparameter als Indikator verwendet wird.

Bevorzugte Ausführungsformen der Erfindung sind Gegenstand der abhängigen Patentansprüche.

Die Erfinder haben erkannt, dass der Grad, in dem ein bestimmter Biometrieparameter für den individuellen klimatischen Komfort repräsentativ ist, stark von der Relativabweichung des aktuellen klimatischen Komforts vom optimalen klimatischen Komfort ist. Mit anderen Worten bedeutet dies, dass ein Biometrieparameter, der im negativen PMV-Bereich (Abweichung vom Optimum in Richtung "zu kalt") hochgradig repräsentativ ist und als empfindlicher Indikator für den aktuellen klimatischen Komfort verwendbar ist, im Bereich positiver PMV-Werte (Abweichung vom Optimum in Richtung "zu warm") äußerst insensitiv sein kann und umgekehrt. Dem wird die Erfindung dadurch gerecht, dass in Bereichen negativer PMV-Werte ein anderer Biometrieparameter als Indikator für den aktuellen klimatischen Komfort verwendet wird als im Bereich positiver PMV-Werte. Der Fachmann wird verstehen, dass die hier vorgenommene Bezugnahme auf das PMV-System rein beispielhaft ist und die Erfindung in keiner Weise einschränken soll. Vielmehr hat das erfindungsgemäße Konzept Gültigkeit unabhängig von der speziellen Art der Darstellung des individuellen klimatischen Komforts.

Als besonders vorteilhaft hat sich erwiesen, bei Abweichung des aktuellen Komfortzustandes vom dem einzuregelnden Ziel-Komfortzustand in Richtung "zu kalt" eine berührungslos gemessene Hauttemperatur des privilegierten Fahrzeuginsassen als Indikator zu verwenden. Dem liegt die Beobachtung zugrunde, dass im negativen PMV-Bereich die Hauttemperatur, insbesondere die Gesichts- und/oder Handtemperatur sehr stark mit dem individuell empfundenen Klimakomfort korreliert und daher in hohem Maße für diesen repräsentativ ist. Messen lässt sich eine solche Hauttemperatur bevorzugt mittels eines auf das Gesicht und/oder die Hände des privilegierten Fahrzeuginsassen gerichteten Infrarottemperatursensors.

Im Gegensatz dazu ist es bei Abweichungen des aktuellen Komfortzustandes von dem einzuregelnden Ziel-Komfortzustand in Richtung "zu warm" besonders vorteilhaft, eine körpernah gemessene Feuchteabgabe des privilegierten Fahrzeuginsassen als Indikator zu verwenden. Dem liegt die Beobachtung zugrunde, dass die Feuchteabgabe des Körpers im Bereich positiver PMV-Werte sehr stark mit dem individuell empfundenen Klimakomfort korreliert und daher hochgradig repräsentativ für diesen ist. Messen lässt sich die Feuchteabgabe des privilegierten Fahrzeuginsassen bevorzugt mittels eines Feuchtesensors in dessen Sitz.

Bei einer bevorzugten Ausführungsform der Erfindung wird also die Regelungsstrategie des Klimatisierungsverfahrens von der Regelgröße "Hauttemperatur" dominiert, wenn der vom privilegierten Fahrzeuginsassen individuell empfundene Klimakomfort in Richtung "zu kalt" vom Optimum abweicht und von der Regelgröße "Feuchteabgabe", wenn der vom privilegierten Fahrzeuginsassen individuell empfundene Klimakomfort in Richtung "zu warm" abweicht.

Bei einer Weiterbildung der Erfindung ist vorgesehen, dass bei Fahrtbeginn eine Anfangs-Hauttemperatur des privilegierten Fahrzeuginsassen gemessen und eine für den Ziel-Komfortzustand repräsentative Ziel-Hauttemperatur in Abhängigkeit von der Anfangs-Hauttemperatur festgelegt wird. Der Begriff des "Fahrtbeginns" ist hier weit zu verstehen und kann, je nach Ausführungsform beispielsweise den Moment bezeichnen, in dem der privilegierte Fahrzeuginsasse nach dem Einsteigen auf seinem Sitz Platz genommen hat, den Moment des Motorstarts, den Moment des Anfahrens oder einen anderen geeigneten Moment, der in die Nähe des Beginns des Klimatisierungsverfahrens fällt. Dieser Weiterbildung liegt die Erkenntnis zugrunde, dass, wie oben ausgeführt, die Hauttemperatur im Bereich negativer PMV-Werte zwar einen sensitiven Indikator für den aktuellen KlimaKomfort darstellt, es aber bei stark unterkühlten Personen während des Aufheizens zu einer deutlichen Verzögerung der Anpassung der Hauttemperatur kommt. Selbst wenn die aufgrund der gemessenen, kalten Hauttemperatur eingeleiteten Heizmaßnahmen bereits dazu geführt haben, dass sich beim privilegierten Fahrzeuginsassen ein optimaler klimatischer Komfort eingestellt hat, wird dies von dessen aktueller Hauttemperatur noch nicht so wiedergespiegelt, wie dies ohne die anfängliche Unterkühlung der Fall wäre. Verließe sich also das Klimatisierungsverfahren allein auf die absolut gemessene Hauttemperatur, würde es schlussfolgern, dass der klimatische Optimalzustand noch nicht erreicht ist, und weiter heizen, was dann zu einer tatsächlichen Überhitzung des Fahrzeuginsassen führen kann. Dies umso mehr, als bei solchermaßen abgesenkter Hauttemperatur auch die Schweißproduktion noch nicht in vollem Maße einsetzt. Insofern wäre auch die Zuhilfenahme der Feuchteabgabe als zusätzlicher Indikator für den klimatischen Komfort nicht zielführend. Die beschriebene Weiterbildung der Erfindung sieht daher vor, denjenigen Hauttemperaturwert, der als repräsentativ für den Ziel-Komfortzustand anzusehen ist, d.h. die Ziel-Hauttemperatur, nicht allgemeingültig festzuschreiben, sondern jeweils im Einzelfall und in Abhängigkeit von der Anfangs-Hauttemperatur zu bestimmen und festzulegen.

Nähere Untersuchungen des Erfinders haben einen vergleichsweise komplexen Zusammenhang zwischen der Anfangs-Hauttemperatur und der für den optimalen KlimaKomfort repräsentativen Hauttemperatur ermittelt. Als Konsequenz sieht eine bevorzugte Ausführungsform der Erfindung vor, dass sich die Regeln zur Bestimmung der festzulegenden Ziel-Hauttemperatur im Fall einer Anfangs-Hauttemperatur unter einem vorgegebenen Grenzwert von denjenigen im Fall einer Anfangs-Hauttemperatur am oder über dem vorgegebenen Grenzwert unterscheiden. Insbesondere kann vorgesehen sein, dass bei jeder Anfangs-Hauttemperatur über dem vorgegebenen Grenzwert dieselbe Ziel-Hauttemperatur festgelegt wird. Demgegenüber kann vorgesehen sein, dass bei einer Anfangs-Hauttemperatur, die um einen Anfangstemperatur-Differenzbetrag unter dem vorgegebenen Grenzwert liegt, eine Ziel-Hauttemperatur festgelegt wird, die um einen Zieltemperatur-Differenzbetrag unter derjenigen Ziel-Hauttemperatur liegt, die in dem Fall, dass die Anfangs-Hauttemperatur ihrem Grenzwert entspricht, festgelegt würde, wobei der Zieltemperatur-Differenzbetrag von dem Anfangstemperatur-Differenzbetrag abhängig ist. Oberhalb des Anfangstemperatur-Grenzwertes, der auch als Unterkühlungs-Grenzwert bezeichnet werden kann, wird sich bei Erreichen des Zustandes PMV = 0 mehr oder weniger dieselbe Hauttemperatur einstellen. Typischerweise liegt diese im Bereich des Gesichtes bei 34 bis 35° C, typischerweise bei 34,3° C. Unterhalb des Unterkühlungs-Grenzwertes hingegen wird diese Hauttemperatur trotz Einstellung des PMV = 0-Zustandes nicht erreicht werden. Insbesondere wird die tatsächlich bei PMV = 0 erreichte Hauttemperatur umso weiter unter der eigentlich erwarteten Hauttemperatur liegen, je weiter die tatsächliche Anfangstemperatur unter dem Anfangstemperatur-Grenzwert liegt. Dieser Zusammenhang ist im Wesentlichen proportional, d.h. er kann durch einen Skalierungsfaktor, der auch gleich 1 sein kann, repräsentiert werden. Gemäß der Erkenntnis des Erfinders liegt der besagte Unterkühlungs-Grenzwert zwischen 28 und 29° C, insbesondere bei 28,3° C.

Analoges gilt für die Erfassung des Komfortzustandes anhand der Feuchteabgabe des privilegierten Insassen bei Abweichungen vom PMV = 0-Zustand in Richtung "zu warm". Auch hier kann eine Abhängigkeit des Zielwertes vom Anfangswert vorgesehen sein. D.h. bei einer bevorzugten Ausführungsform der Erfindung wird bei Fahrtbeginn eine Anfangs-Feuchteabgabe des privilegierten Fahrzeuginsassen gemessen und eine für den Ziel-Komfortzustand repräsentative Ziel-Feuchteabgabe in Abhängigkeit von der Anfangs-Feuchteabgabe festgelegt. Besonders bevorzugt wird dabei die Feuchteabgabe des privilegierten Fahrzeuginsassen indirekt mittels eines eine oberflächennahe Absolutfeuchte in dessen Sitz messenden Feuchtesensors gemessen. Zur Erläuterung, insbesondere auch zur Definition des Begriffs des Fahrtbeginns, sei analog auf das oben gesagte verwiesen.

Allerdings ergibt sich im Zusammenhang mit der Feuchteabgabe-Regulierung eine Besonderheit gegenüber der Regulierung der Hauttemperatur, insbesondere wenn eine Sitzlüftung als ein Klimatisierungsorgan eingesetzt wird. Hier kann eine schnelle Hinführung zu einem "weit entfernten" Ziel-Feuchtewert mit erheblichem Diskomfort (unangenehme Abkühlung des Rücken-, insbesondere des Nierenbereichs) verbunden sein. Eine Verfeinerung der Erfindung sieht daher vor, dass die von der Anfangs-Feuchteabgabe abhängige Ziel-Feuchteabgabe indirekt festgelegt wird als ein von dem Feuchtesensor gemessener Ziel-Absolutfeuchtewert, der um 1,8 bis 2,2 g/kg unter dem für die Anfangs-Feuchteabgabe repräsentativen Anfangs-Absolutfeuchtewert, nicht aber unter 10 bis 14 g/kg liegt. Es hat sich nämlich herausgestellt, dass grundsätzlich ein Zielwert von ca. 12 g/kg Absolutfeuchte erstrebenswert ist, dass allerdings eine Trocknung mittels Sitzlüftung um mehr als ca. 2 g/kg als unangenehm empfunden wird.

Weitere Merkmale und Vorteile der Erfindung ergeben sich aus der nachfolgenden, speziellen Beschreibung und den Zeichnungen.

Es zeigen:
- Figur 1: eine Grafik zur Illustration des Komfort-Indexes PMV,
- Figur 2: eine Grafik zur Illustration der Abhängigkeit der Hauttemperatur im Gesicht von Testpersonen in Abhängigkeit vom Komfort-Index,
- Figur 3: eine Grafik zur Illustration der Abhängigkeit der Wärmeabgabe durch Verdunstung von Testpersonen in Abhängigkeit von der Raumtemperatur,
- Figur 4: eine Grafik zur Illustration der Abhängigkeit des Hauttemperaturverlaufs bei Änderungen des individuellen Komfort-Empfindens von der Anfangs-Hauttemperatur.

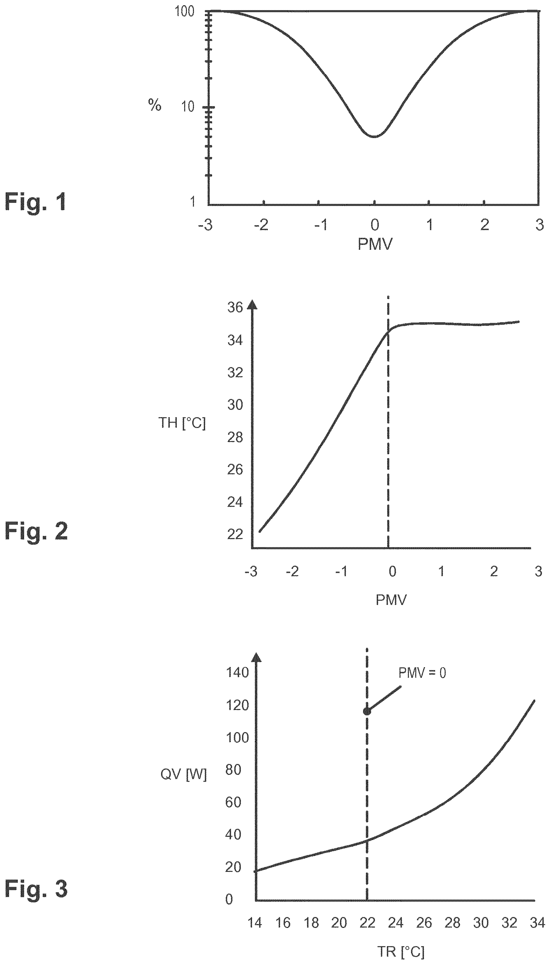

Die Figuren 1 bis 4 zeigen Grafiken zur Illustration der von dem erfindungsgemäßen Verfahren ausgenutzten bioklimatischen Verhältnissen.

Figur 1 zeigt eine Grafik zur Illustration des Komfort-Indexes PMV gemäß der DIN EN ISO 7730. Die Abszisse zeigt den PMV-Wert zwischen -3 und +3. Auf der Ordinate ist in logarithmischer Skalierung der zu erwartende Prozentsatz von mit den aktuellen klimatischen Bedingungen unzufriedenen Testpersonen aufgetragen. Bei der zentralen Neutralposition PMV = 0 ist zu erwarten, dass die überwiegende Anzahl von Testpersonen mit den aktuellen klimatischen Bedingungen zufrieden ist. Bei den Extrempositionen PMV = -3 bzw. PMV = +3 (zu kalt bzw. zu warm) ist zu erwarten, dass nahezu sämtliche Testpersonen mit den aktuellen klimatischen Bedingungen unzufrieden sind.

Ziel des erfindungsgemäßen, wie auch der meisten sonstigen Klimatisierungsverfahren ist es daher, einen Komfortindex von PMV = 0 einzuregeln.

Als Indikator für den jeweils aktuell empfundenen Klimakomfort dienen die Hauttemperatur TH, insbesondere im Gesichts- und/oder Handbereich, sowie die Feuchteabgabe. Figur 2 zeigt die Abhängigkeit der Gesichtshauttemperatur TH als Funktion des Komfort-Indexes PMV. Der Graph von Figur 2 ist dabei aus Einzelpunkten zusammengesetzt, die jeweils Mittelungen über Testpersonengruppen im stationären Zustand wiedergeben. So liegt beispielsweise die Gesichtshauttemperatur von Personen, die sich dauerhaft im Komfortbereich von PMV = 0 befinden, bei ca. 34,3° C. Bei Personen, die sich längerfristig im Bereich "kühl" (PMV = -1) befinden, stellt sich hingegen eine mittlere Gesichtshauttemperatur von ca. 29° C ein. Figur 2 spiegelt daher eine Zusammenfassung solch stationärer Zustände wieder.

Analoges gilt für Figur 3, die die durch Verdunstung abgegebene Wärmemenge QV eines Menschen in Watt als Funktion der Raumtemperatur TR wiedergibt. In Figur 3 ist gestrichelt die Position PMV = 0 eingetragen, welche typischerweise bei einer Raumtemperatur von 22° C vorliegt.

Die Figuren 2 und 3 verdeutlichen, dass das Verhalten des jeweils dargestellten Parameters einerseits und andererseits der Grenze PMV = 0 unterschiedlich ist. Insbesondere ist der Gradient einerseits der Grenze deutlich verschieden von dem Gradienten andererseits der Grenze. Eine Zusammenschau der Figuren 2 und 3 zeigt zudem, dass das Verhalten von Hauttemperatur und Wärmeabgabe bezüglich der Gradientenverteilung gerade einander umgekehrt ist. So weist die Hauttemperatur TH im negativen PMV-Bereich einen großen und im positiven PMV-Bereich einen sehr kleinen Gradienten auf. Umgekehrt ist der Gradient der Feuchteabgabe (repräsentiert durch die Wärmeabgabe durch Verdunstung QV) im negativen PMV-Bereich (kälter als 22° C Raumtemperatur) deutlich kleiner als der Gradient im positiven PMV-Bereich (Raumtemperatur TR wärmer als 22° C).

Diese von dem Erfinder erkannten Zusammenhänge werden bei dem erfindungsgemäßen Verfahren dahingehend ausgenutzt, dass im negativen PMV-Bereich die Hauttemperatur, insbesondere eine berührungslos gemessene Gesichts- oder Handtemperatur, als Indikator für den aktuell empfundenen Wärmekomfort und somit als Regelgröße für die Klimaregelung verwendet wird. Demgegenüber wird im positiven PMV-Bereich die Feuchteabgabe, vorzugsweise gemessen durch körpernah im Fahrzeugsitz positionierte Feuchtesensoren, als Indikator für den aktuell empfundenen Klimakomfort und als Regelgröße für die Klimaregelung verwendet.

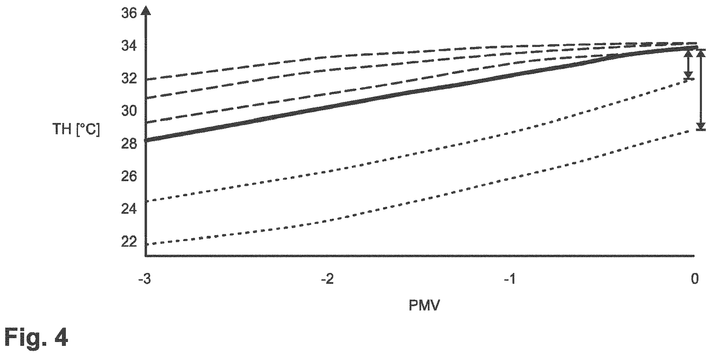

Figur 4 zeigt erneut eine Abhängigkeit der Gesichtshauttemperatur TH vom Klimakomfort-Index PMV. Dargestellt ist nur der negative PMV-Bereich. Im Gegensatz zur Darstellung von Figur 2 zeigt Figur 4 die dynamische Abhängigkeit der Hauttemperatur vom Komfortindex. Dargestellt ist der dynamische Verlauf der Hauttemperatur je einer Gruppe von Testpersonen mit gleicher Anfangs-Hauttemperatur während eines kontinuierlichen Anstiegs des PMV-Wertes, d.h. während eines kontinuierlichen Aufheizvorgangs. Man erkennt, dass diejenigen Personengruppen, die eine Anfangs-Hauttemperatur von mehr als ca. 28,3° C aufwiesen, beim Erreichen vom PMV = 0 unabhängig von der konkreten Anfangs-Hauttemperatur eine Hauttemperatur von ca. 34,3° C zeigten. Dieser Wert entspricht auch dem nach Figur 2 erwarteten Wert. Allerdings hat der Erfinder erkannt, dass Personen mit einer Anfangs-Hauttemperatur von unter 28,3° C eine deutlich verzögerte Anpassung der Hauttemperatur bei Veränderung des Komfort-Indexes zeigen. Insbesondere liegt ihre Hauttemperatur beim Erreichen von PMV = 0 unter dem erwarteten Wert von 34,3° C und zwar umso weiter darunter, je weiter die Anfangs-Hauttemperatur unter dem kritischen Anfangswert von 28,3° C lag.

Dieser zusätzlichen Erkenntnis wird eine besonders bevorzugte Ausführungsform der Erfindung dadurch gerecht, dass im Rahmen der Klimaregelung der den Komfortbereich von PMV = 0 repräsentierende Hauttemperaturwert in jedem Einzelfall in Abhängigkeit von dem jeweiligen Anfangs-Hautwert bei Fahrtbeginn festgelegt wird. Liegt die Anfangs-Hauttemperatur des privilegierten Fahrzeuginsassen bei Fahrtbeginn oberhalb des kritischen Wertes von 28,3° C, kann der Standardwert von 34,3° C als repräsentativ für PMV = 0 verwendet werden. Liegt die Anfangs-Hauttemperatur bei Fahrtbeginn jedoch unter dem kritischen Wert von 28,3 ° C muss der den Komfortbereich vom PMV = 0 repräsentierende Hauttemperaturwert entsprechend nach unten korrigiert werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere wird der Fachmann verstehen, dass das hier zur Quantifizierung des Komfortindexes verwendete PMV-System nur rein beispielhaft verwendet wurde. Andere Arten der Quantifizierung des individuell empfundenen Klimakomforts können im Rahmen der vorliegenden Erfindung ebenso Einsatz finden.

## Patentansprüche

1. Verfahren zur Klimatisierung einer Fahrgastzelle eines Kraftfahrzeugs, wobei Klimatisierungsorgane, mittels derer Klimaparameter in der Fahrgastzelle beeinflussbar sind, von einer Steuereinrichtung angesteuert werden, einen subjektiven Ziel-Komfortzustand eines privilegierten Fahrzeuginsassen einzuregeln,
wobei als ein Indikator für den jeweils aktuellen Komfortzustand ein jeweils aktueller, für den subjektiven Komfortzustand repräsentativer Biometrieparameter des privilegierten Fahrzeuginsassen gemessen wird,
**dadurch gekennzeichnet,**
**dass** in Abhängigkeit davon, ob der aktuelle Komfortzustand in Richtung "zu kalt" oder in Richtung "zu warm" von dem einzuregelnden Ziel-Komfortzustand abweicht, bei der Regelung ein anderer, für den subjektiven Komfortzustand repräsentativerBiometrieparameter als Indikator verwendet wird.

2. Verfahren nach Anspruch 1,
**dadurch gekennzeichnet,**
**dass** bei Abweichung des aktuellen Komfortzustandes von dem einzuregelnden Ziel-Komfortzustand in Richtung "zu kalt" eine berührungslos gemessene Hauttemperatur des privilegierten Fahrzeuginsassen als Indikator verwendet wird.

3. Verfahren nach Anspruch 2,
**dadurch gekennzeichnet,**
**dass** bei Fahrtbeginn eine Anfangs-Hauttemperatur des privilegierten Fahrzeuginsassen gemessen und eine für den Ziel-Komfortzustand repräsentative Ziel-Hauttemperatur in Abhängigkeit von der Anfangs-Hauttemperatur festgelegt wird.

4. Verfahren nach Anspruch 3,
**dadurch gekennzeichnet,**
**dass** sich die Regeln zur Bestimmung der festzulegenden Ziel-Hauttemperatur im Fall einer Anfangs-Hauttemperatur unter einem vorgegebenen Grenzwert von denjenigen im Fall einer Anfangs-Hauttemperatur am oder über dem vorgegebenen Grenzwert unterscheiden.

5. Verfahren nach Anspruch 4,
**dadurch gekennzeichnet,**
**dass** bei jeder Anfangs-Hauttemperatur über dem vorgegebenen Grenzwert dieselbe Ziel-Hauttemperatur festgelegt wird.

6. Verfahren nach einem der Ansprüche 4 bis 5,
**dadurch gekennzeichnet,**
**dass** bei einer Anfangs-Hauttemperatur, die um einen Anfangstemperatur-Differenzbetrag unter dem vorgegebenen Grenzwert liegt, eine Ziel-Hauttemperatur festgelegt wird, die um einen Zieltemperatur-Differenzbetrag unter derjenigen Ziel-Hauttemperatur liegt, die in dem Fall, dass die Anfangs-Hauttemperatur ihrem Grenzwert entspricht, festgelegt würde, wobei der Zieltemperatur-Differenzbetrag von dem Anfangstemperatur-Differenzbetrag abhängig ist.

7. Verfahren nach einem der Ansprüche 4 bis 6,
**dadurch gekennzeichnet,**
**dass** der Zieltemperatur-Differenzbetrag gleich dem um einen Skalierungsfaktor skalierten Anfangstemperatur-Differenzbetrag ist.

8. Verfahren nach einem der Ansprüche 2 bis 7,
**dadurch gekennzeichnet,**
**dass** die aktuelle Hauttemperatur des privilegierten Fahrzeuginsassen mittels eines auf dessen Gesicht und/oder dessen Hände gerichteten Infrarot-Temperatursensor gemessen wird.

9. Verfahren nach einem der vorangehenden Ansprüche,
**dadurch gekennzeichnet,**
**dass** bei Abweichung des aktuellen Komfortzustandes von dem einzuregelnden Ziel-Komfortzustand in Richtung "zu warm" eine körpernah gemessene Feuchteabgabe des privilegierten Fahrzeuginsassen als Indikator verwendet wird.

10. Verfahren nach Anspruch 9,
**dadurch gekennzeichnet,**
**dass** bei Fahrtbeginn eine Anfangs-Feuchteabgabe des privilegierten Fahrzeuginsassen gemessen und eine für den Ziel-Komfortzustand repräsentative Ziel-Feuchteabgabe in Abhängigkeit von der Anfangs-Feuchteabgabe festgelegt wird.

11. Verfahren nach einem der Ansprüche 9 bis 10,
**dadurch gekennzeichnet,**
**dass** die Feuchteabgabe des privilegierten Fahrzeuginsassen indirekt mittels eines eine oberflächennahe Absolutfeuchte in dessen Sitz messenden Feuchtesensors gemessen wird.

12. Verfahren nach Anspruch 11, soweit rückbezogen auf Anspruch 10,
**dadurch gekennzeichnet,**
**dass** die von der Anfangs-Feuchteabgabe abhängige Ziel-Feuchteabgabe indirekt festgelegt wird als ein von dem Feuchtesensor gemessener Ziel-Absolutfeuchtewert, der um 1,8 bis 2,2 g/kg unter dem für die Anfangs-Feuchteabgabe repräsentativen Anfangs-Absolutfeuchtewert, nicht aber unter 10 bis 14 g/kg liegt.

## Claims

1. Method for air-conditioning a passenger compartment of a motor vehicle, wherein air conditioning units by means of which climatic parameters in the passenger compartment are influenceable are actuated by a control device to adjust a subjective target comfort state for a privileged vehicle occupant, wherein an indicator measured for the respective current comfort state is a respective current biometric parameter, representative of the subjective comfort state, of the privileged vehicle occupant,
**characterized**
**in that** depending on whether the current comfort state differs from the target comfort state to be adjusted in the "too cold" direction or in the "too warm" direction, a different biometric parameter representative of the subjective comfort state is used as the indicator during regulation.

2. Method according to Claim 1,
**characterized**
**in that** if the current comfort state differs from the target comfort state to be adjusted in the "too cold" direction then a contactlessly measured skin temperature of the privileged vehicle occupant is used as the indicator.

3. Method according to Claim 2,
**characterized**
**in that** an initial skin temperature of the privileged vehicle occupant is measured at the beginning of the journey and a target skin temperature representative of the target comfort state is stipulated on the basis of the initial skin temperature.

4. Method according to Claim 3,
**characterized**
**in that** the rules for determining the target skin temperature to be stipulated in the case of an initial skin temperature below a prescribed limit value differ from those in the case of an initial skin temperature at or above the prescribed limit value.

5. Method according to Claim 4,
**characterized**
**in that** the same target skin temperature is stipulated for every initial skin temperature above the prescribed limit value.

6. Method according to either of Claims 4 and 5,
**characterized**
**in that** a target skin temperature that is below that target skin temperature that will be stipulated in the event of the initial skin temperature being consistent with its limit value by a target temperature difference is stipulated for an initial skin temperature that is below the prescribed limit value by an initial temperature difference, the target temperature difference being dependent on the initial temperature difference.

7. Method according to one of Claims 4 to 6,
**characterized**
**in that** the target temperature difference is the same as the initial temperature difference scaled by a scaling factor.

8. Method according to one of Claims 2 to 7,
**characterized**
**in that** the current skin temperature of the privileged vehicle occupant is measured by means of an infrared temperature sensor directed at the face and/or the hands of said vehicle occupant.

9. Method according to one of the preceding claims,
**characterized**
**in that** if the current comfort state differs from the target comfort state to be adjusted in the "too warm" direction then a moisture release from the privileged vehicle occupant, measured close to the body, is used as the indicator.

10. Method according to Claim 9,
**characterized**
**in that** an initial moisture release from the privileged vehicle occupant is measured at the beginning of the journey and a target moisture release representative of the target comfort state is stipulated on the basis of the initial moisture release.

11. Method according to either of Claims 9 and 10,
**characterized**
**in that** the moisture release from the privileged vehicle occupant is measured indirectly by means of a moisture sensor measuring an absolute moisture close to the surface in the seat of said vehicle occupant.

12. Method according to Claim 11, in so far as it refers back to Claim 10,
**characterized**
**in that** the target moisture release dependent on the initial moisture release is stipulated indirectly as a target absolute moisture value, measured by the moisture sensor, that is 1.8 to 2.2 g/kg below the initial absolute moisture value representative of the initial moisture release, but not below 10 to 14 g/kg.

## Revendications

1. Procédé de climatisation d'un habitacle d'un véhicule automobile, dans lequel des organes de climatisation dont les paramètres de climatisation permettent d'agir sur l'habitacle sont commandés par un dispositif de commande, pour réguler un état de confort cible subjectif d'un passager privilégié du véhicule,
dans lequel un paramètre biométrique actuel respectif représentatif de l'état de confort subjectif du passager privilégié du véhicule est mesuré en tant qu'indicateur de l'état de confort respectif actuel,
**caractérisé en ce que**, lors de la régulation, un autre paramètre biométrique représentatif de l'état de confort subjectif est utilisé en tant qu'indicateur en fonction du fait de savoir si l'état de confort actuel s'écarte d'un état de confort cible à réguler dans la direction "plus froid" ou dans la direction "plus chaud".

2. Procédé selon la revendication 1,
**caractérisé en ce que** lorsque l'écart de l'état de confort actuel par rapport à l'état de confort cible à réguler est orienté dans la direction "plus froid", une température cutanée mesurée sans contact du passager privilégié du véhicule est utilisée en tant qu'indicateur.

3. Procédé selon la revendication 2,
**caractérisé en ce qu'**au début du déplacement, une température cutanée initiale du passager privilégié du véhicule est mesurée et une température cutanée cible représentative de l'état de confort cible est établie en fonction de la température cutanée initiale.

4. Procédé selon la revendication 3,
**caractérisé en ce que** les régulations permettant de déterminer la température cutanée cible à établir dans le cas où la température cutanée initiale est inférieure à une valeur limite prédéterminée sont différentes des régulations effectuées dans le cas où la température cutanée initiale est supérieure ou égale à la valeur limite prédéterminée.

5. Procédé selon la revendication 4,
**caractérisé en ce que** des températures cutanées cibles identiques sont établies lorsque chaque température cutanée initiale est supérieure à la valeur limite prédéterminée.

6. Procédé selon l'une des revendications 4 à 5,
**caractérisé en ce que**, pour une température cutanée initiale qui se situe au voisinage d'une valeur de différence de température initiale inférieure à la valeur limite prédéterminée, ou établit une température cutanée cible qui se situe au voisinage d'une valeur de différence de température cible inférieure à la température cutanée cible qui aurait été établie lorsque la température cutanée initiale correspond à sa valeur cible, dans lequel la valeur de différence de température cible dépend de la valeur de différence de température initiale.

7. Procédé selon l'une des revendications 4 à 6,
**caractérisé en ce que** la valeur de différence de température cible est égale à la valeur de différence de température initiale mise à l'échelle avec un certain facteur d'échelle.

8. Procédé selon l'une des revendications 2 à 7,
**caractérisé en ce que** la température cutanée actuelle du passager privilégié du véhicule est mesurée au moyen d'un capteur de température infrarouge qui est dirigé vers son visage et/ou vers ses mains.

9. Procédé selon l'une des revendications précédentes,
**caractérisé en ce que**, lorsqu'un écart entre l'état de confort actuel et l'état de confort cible à réguler est orienté dans la direction "plus chaud", un dégagement d'humidité mesuré à proximité du corps du passager privilégié du véhicule est utilisé en tant qu'indicateur.

10. Procédé selon la revendication 9,
**caractérisé en ce qu'**au début du déplacement, un dégagement d'humidité initial du passager privilégié du véhicule est mesuré et un dégagement d'humidité cible représentatif de l'état de confort cible est établi en fonction du dégagement d'humidité initial.

11. Procédé selon l'une des revendications 9 à 10,
**caractérisé en ce que** le dégagement d'humidité du passager privilégié du véhicule est mesuré indirectement au moyen d'un capteur d'humidité mesurant une humidité absolue à proximité de la surface de son siège.

12. Procédé selon la revendication 11 lorsqu'elle fait référence à la revendication 10,
**caractérisé en ce que** le dégagement d'humidité cible dépendant du dégagement d'humidité initial est établi de manière indirecte comme étant une valeur d'humidité absolue cible, mesurée par le capteur d'humidité, qui est inférieure de 1,8 à 2,2 g/kg à la valeur d'humidité absolue initiale représentative du dégagement d'humidité initial, mais ne se situant pas en dessous de 10 à 14 g/kg.
